Europäisches Patentamt

European Patent Office

Office européen des brevets

(11) Numéro de publication: **0 545 287 B1**

(12) **FASCICULE DE BREVET EUROPEEN**

(45) Date de publication du fascicule du brevet: **11.10.95**    (51) Int. Cl.⁶: **B60C 9/20**

(21) Numéro de dépôt: **92120182.8**

(22) Date de dépôt: **26.11.92**

(54) **Pneumatique radial dont l'armature de sommet est composée de nappes de résistances différentes.**

| | |
|---|---|
| (30) Priorité: **04.12.91 FR 9115119** | (73) Titulaire: **COMPAGNIE GENERALE DES ETA-BLISSEMENTS MICHELIN - MICHELIN & CIE 12, Cours Sablon F-63040 Clermont-Ferrand Cédex (FR)** |
| (43) Date de publication de la demande: **09.06.93 Bulletin 93/23** | |
| (45) Mention de la délivrance du brevet: **11.10.95 Bulletin 95/41** | (72) Inventeur: **Chapelle, Michel 4, Impasse des Platanes, Mozac F-63200 Riom (FR)** |
| (84) Etats contractants désignés: **AT DE ES FR GB IT LU** | |
| (56) Documents cités: **FR-A- 2 512 747 FR-A- 2 584 343 GB-A- 1 193 411 GB-A- 2 072 590 US-A- 5 027 877** | (74) Mandataire: **Devaux, Edmond-Yves et al Michelin & Cie Service SRK. Brevets 23, Place des Carmes F-63040 Clermont-Ferrand Cédex (FR)** |
| **PATENT ABSTRACTS OF JAPAN vol. 9, no. 38 (M-358)(1761) 19 Février 1985 & JP-A-59 179 405 SUMITOMO GOMU KOGYO K.K.) 12 Octobre 1984** | |

Rank Xerox (UK) Business Services
(3.10/3.09/3.3.3)

## Description

La présente invention a pour objet un pneumatique de type à armature de carcasse radiale destiné en particulier aux véhicules de moyen tonnage tels que les véhicules utilitaires légers ou les véhicules dits 4x4. Elle concerne plus particulièrement l'armature de sommet d'un tel pneumatique.

L'armature de sommet se compose en général de deux nappes de câbles inextensibles parallèles entre eux dans une nappe, et croisés d'une nappe à la suivante en faisant avec la direction circonférentielle des angles égaux ou non et compris entre 10 et 45°. Les câbles utilisés sont le plus souvent métalliques et en acier et de telles nappes sont dites de "travail".

Le pneumatique du type étudié est soumis à différentes conditions de roulage : en particulier il est amené à rouler sur des sols où se trouvent des cailloux, obstacles de tout genre, qui peuvent être coupants. Le pneumatique et plus particulièrement son armature de sommet est alors sujette à des perforations, des coupures de câbles avec pénétration éventuelle d'eau, ce qui provoque une oxydation de câbles et/ou une séparation entre câbles d'une même nappe ou entre câbles respectivement de deux nappes de l'armature.

L'amélioration de la résistance d'une armature de sommet à de telles injures est, de manière généralement connue, obtenue par addition radialement à l'extérieur des deux nappes précitées de travail d'une troisième nappe de câbles métalliques élastiques, nappe dite de protection. Cette solution présente l'inconvénient majeur d'être coûteuse tout en ne présentant pas les meilleures performances.

L'invention propose une autre solution consistant dans son principe général à répartir le métal de l'armature de sommet de manière différente. Conformément à l'invention, un pneumatique à armature de carcasse radiale et ayant une armature de sommet formée d'au moins trois nappes de fils ou câbles métalliques inextensibles faisant avec la direction circonférentielle des angles ± $\alpha$ compris entre 10° et 45°, caractérisé en ce que les résistances, par centimètre de largeur, $R_1$, $R_2$, $R_3$ respectivement de la nappe d'armature de sommet radialement intérieure, de la nappe intermédiaire, de la nappe radialement extérieure sont telles que

$$1,5 \leq R_1/R_2 \leq 2,5 \text{ et } 0,5 \leq R_3/R_2 \leq 1,5,$$

la nappe intermédiaire et la nappe radialement extérieure étant formées de fils ou câbles tels que, dans chaque nappe, la distance axiale (e) séparant deux fils ou câbles adjacents soit au moins égale au diamètre des fils ou câbles.

Il faut entendre par fils ou câbles inextensibles des fils ou câbles présentant sous un effort égal à 10 % de leur force de rupture un allongement relatif au plus égal à 0,2 % .

La résistance par centimètre de largeur d'une nappe est la résistance à la rupture mesurée sur une nappe d'un centimètre de largeur mesuré perpendiculairement à la direction des fils ou câbles.

La distance (e) séparant deux câbles adjacents d'une nappe est mesurée d'une part entre les deux génératrices respectivement des câbles ou fils, assimilés à des cylindres, se faisant face dans le plan de la nappe, et d'autre part perpendiculairement auxdites génératrices.

Il est évident que les résistances au centimètre des nappes d'armature de sommet, outre qu'elles obéissent aux relations revendiquées, sont choisies en fonction de différents facteurs que sont la pression de gonflage, l'angle des câbles avec la direction circonférentielle, les données géométriques du pneumatique, et les coefficients de sécurité permettant de tenir compte des surcharges statiques et dynamiques subies par le pneumatique.

S'il est possible que les fils ou câbles des trois nappes soient croisés d'une nappe à la suivante, c'est-à-dire avec une configuration angulaire (+ $\alpha$, - $\beta$, + $\gamma$), il est avantageux que les fils ou câbles de la nappe radialement extérieure aient la même direction d'inclinaison que les fils ou câbles de la nappe intermédiaire, c'est-à-dire avec une configuration angulaire (+ $\alpha$, - $\beta$, - $\gamma$). Cette disposition préférentielle permet une meilleure endurance de l'armature de sommet vis-à-vis des séparations entre nappes de l'armature.

Afin de minimiser les décollages entre extrémités axiales des différentes nappes, il est avantageux que la nappe radialement intérieure soit axialement la plus large, et que la nappe radialement extérieure ait une largeur supérieure à la largeur de la nappe intermédiaire.

Les résultats relatifs à la séparation inter-nappes, suite à coupure-oxydation, seront encore améliorés si la structure des câbles de la nappe radialement extérieure et de la nappe intermédiaire est différente de la structure des câbles de la nappe radialement intérieure. Les câbles des nappes de résistances $R_2$ et $R_3$ seront des câbles dits "ouverts" ou "aérés", c'est-à-dire ayant une structure permettant l'introduction du caoutchouc de calandrage à l'intérieur des câbles, alors que les câbles de la nappe de résistance $R_1$ seront des câbles dits "fermés" ayant une structure ne permettant pas ladite introduction de caoutchouc.

2

L'invention sera mieux décrite et mieux comprise à l'aide de la description des modes de réalisation non limitatifs illustrés par le dessin annexé sur lequel :

- la figure 1 représente en coupe radiale un pneumatique selon l'invention avec une armature de carcasse et une armature de sommet à trois nappes de travail en acier ;
- la figure 2 représente en coupe radiale une variante préférentielle relative aux largeurs des nappes de l'armature de sommet.

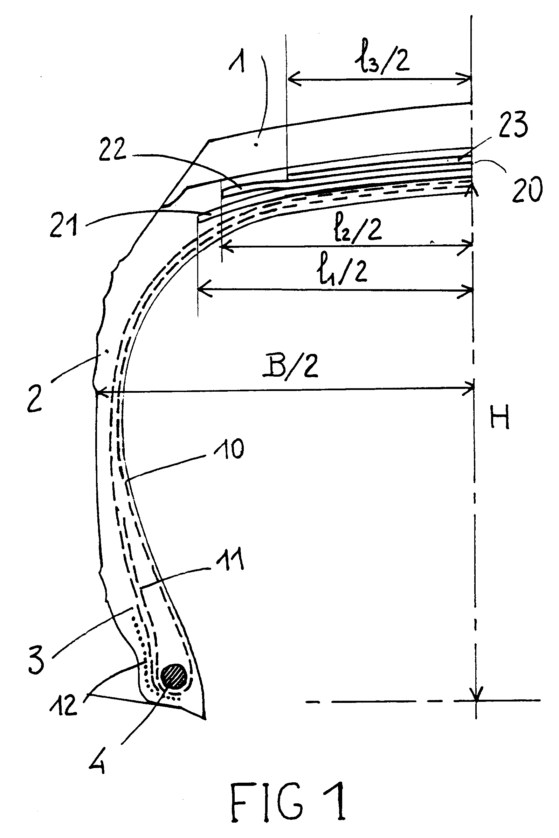

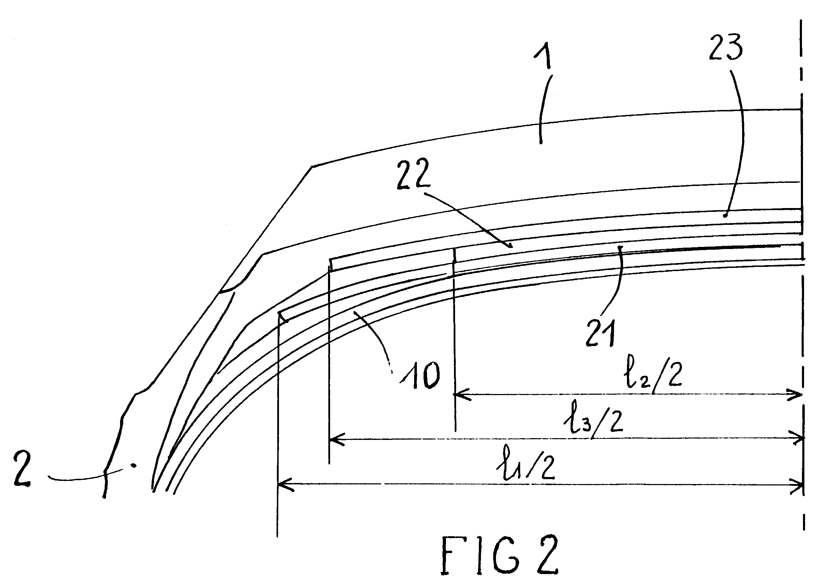

Les figures concernent un pneumatique 185.80-R-14 XC de type à carcasse radiale pour véhicules de moyen tonnage, dénommés usuellement camionnettes. Les mêmes repères désignent sur les figures 1 et 2 les mêmes éléments constitutifs.

Le pneumatique, conforme à l'invention, comporte une bande de roulement (1), des flancs (2) se terminant par des bourrelets (3) munis chacun d'une tringle de type "tressée" (4). L'armature de carcasse (10), se compose de deux nappes (10) de câbles en textile disposés dans des plans radiaux (seuls les axes moyens de ces nappes sont représentés). L'une de ces nappes est enroulée autour des tringles (4) et s'étend d'un bourrelet (3) à l'autre. Cette nappe se prolonge après enroulement autour des tringles par deux retournements (11) dont les extrémités sont situées à une distance du siège du bourrelet comprise entre le quart et la moitié de la hauteur (H) sur jante du pneumatique, cette hauteur étant la distance radiale entre le siège du bourrelet et le point de l'armature de carcasse le plus éloigné radialement de l'axe de rotation du pneumatique.

La deuxième nappe de carcasse (10) superposée radialement à la première n'est pas enroulée autour des tringles (4), mais ses bords sont accolés aux retournements (11) de la première nappe de carcasse (10). Les bourrelets (3) sont d'autre part renforcés par des raidisseurs (12) en câbles métalliques.

L'armature de sommet (20) est composée de trois nappes dites de travail : une nappe (21) radialement intérieure et la plus proche de l'armature de carcasse (10), une nappe intermédiaire (22) et une nappe radialement extérieure (23). Les câbles d'acier de la nappe (21) sont inclinés par rapport à la direction circonférentielle du pneumatique d'un angle ($\alpha$) égal à 22° à droite. Les câbles d'acier de la nappe (22) sont inclinés du même angle ($\alpha$) mais de manière symétrique par rapport aux câbles de la nappe (21). Quant aux câbles de la nappe (23), ils sont inclinés de l'angle ($\alpha$) parallèlement aux câbles de la nappe (22), soit une configuration globale + 22°, - 22°, - 22°.

Les trois nappes (21), (22) et (23) ont des largeurs $l_1$, $l_2$, $l_3$ respectivement égales à 140 mm, 120 mm, et 110 mm.

La description du pneumatique, conforme à l'invention, sera complétée avec les données du tableau I qui suit, comparativement à un pneumatique de fabrication usuelle ayant deux nappes d'armature de sommet identiques.

TABLEAU I

|  |  | Pneumatique de l'invention | Pneumatique usuel |
|---|---|---|---|
| Nbre de nappes |  | 3 | 2 |
| Câbles nappe 21 |  |  |  |
| diamètre fil unitaire mm |  | 0,28 | 0,23 |
| nombre de fils/toron |  | 9 | 9 |
| nombre de torons |  | 1 sans frette | 1 avec frette |
| Force rupture d'un câble | daN | 144 | 98 |
| Nbre câbles par dm |  | 36 | 50 |
| Résistance au dm | daN | 5184 | 4900 |
| Câbles nappes 22 et 23 |  |  |  |
| Diamètre fil unitaire | mm | 0,23 | identiques aux câbles de la nappe 21 |
| Nombre de fils/toron |  | 2 |  |
| Nombre de torons |  | 3 sans frette |  |
| Force rupture d'un câble | daN | 65 |  |
| Nbre câbles par dm |  | 41 |  |
| Résistance au dm | daN | 2665 |  |

La figure 2 représente simplement l'armature de sommet d'un pneumatique, conforme à l'invention, avec une variante dans les largeurs des nappes de ladite armature : la nappe (22) a une largeur ($l_2$) de 110 mm, inférieure à la largeur ($l_3$) de la nappe (23) égale à 120 mm, les deux largeurs ($l_2$) et ($l_3$) étant inférieures à la largeur ($l_1$) de la nappe (21) égale à 140 mm.

Le pneumatique est par ailleurs identique en tous points, autres que les largeurs, au pneumatique décrit précédemment.

Un roulage, sur une piste parsemée de cailloux de grosseur adaptée et présentant des arêtes vives et coupantes, le pneumatique testé étant rendu mouillé par passage dans un bassin d'eau salée, permet de mettre en évidence le très bon comportement du pneumatique conforme à l'invention et représenté sur la figure 2, qui a réalisé un kilométrage, avant séparation complète due aux coupures et oxydations subies par les câbles de l'armature de sommet, supérieur au kilométage moyen effectué par des pneumatiques de fabrication courante, d'environ 50 % (11 000 km pour 7 500 km).

**Revendications**

1. Pneumatique à armature de carcasse radiale (10) surmontée d'une armature de sommet (20) formée d'au moins trois nappes (21, 22, 23) de fils ou câbles métalliques inextensibles faisant avec la direction circonférentielle des angles ± $\alpha$ compris entre 10° et 45°, caractérisé en ce que les résistances, par centimètre de largeur, $R_1$, $R_2$, $R_3$ respectivement de la nappe d'armature de sommet radialement intérieure (21), de la nappe intermédiaire (22), de la nappe radialement extérieure (23) sont telles que $1,5 \leq R_1/R_2 \leq 2,5$ et $0,5 \leq R_3/R_2 \leq 1,5$, la nappe intermédiaire (22) et la nappe radialement extérieure (23) étant formées de fils ou câbles tels que, dans chaque nappe, la distance axiale (e) séparant deux fils ou câbles adjacents soit au moins égale au diamètre des fils ou câbles.

2. Pneumatique selon la revendication 1, caractérisé en ce que les nappes (21, 22, 23) d'armature de sommet (20) ont une configuration angulaire + $\alpha$, - $\beta$, - $\gamma$.

3. Pneumatique selon l'une des revendications 1 à 2, caractérisé en ce que les largeurs axiales $l_1$, $l_2$, $l_3$ respectivement des nappes (21, 22, 23) de l'armature de sommet (20) sont telles que

$$l_1 > l_3 > l_2$$

4

**4.** Pneumatique selon l'une des revendications 1 à 3, caractérisé en ce que les câbles de la nappe (21) la plus proche de l'armature de carcasse radiale (10) ont une structure fermée et en ce que les câbles de la nappe intermédiaire (22) et de la nappe radialement extérieure (23) sont identiques et ont une structure ouverte.

**Claims**

**1.** A tyre with radial carcass reinforcement (10) surmounted by a crown reinforcement (20) formed of at least three plies (21, 22, 23) of inextensible metal wires or cords forming angles $\pm \alpha$ of between $10°$ and $45°$ with the circumferential direction, characterised in that the strengths per centimetre of width, $R_1$, $R_2$, $R_3$ of the radially inner crown reinforcement ply (21), of the intermediate ply (22), and of the radially outer ply (23), respectively, are such that $1.5 \leq R_1/R_2 \leq 2.5$ and $0.5 \leq R_3/R_2 \leq 1.5$, the intermediate ply (22) and the radially outer ply (23) being formed of wires or cords such that, in each ply, the axial distance (e) separating two adjacent wires or cords is at least equal to the diameter of the wires or cords.

**2.** A tyre according to claim 1, characterised in that the plies (21, 22, 23) of the crown reinforcement (20) have an angular configuration $+ \alpha$, $- \beta$, $- \gamma$.

**3.** A tyre according to one of claims 1 to 2, characterised in that the axial widths $l_1$, $l_2$, $l_3$ of the plies (21, 22, 23), respectively, of the crown reinforcement (20) are such that

$$l_1, > l_3 > l_2.$$

**4.** A tyre according to any one of claims 1 to 3, characterised in that the cords of the ply (21) closest to the radial carcass reinforcement (10) have a closed structure and that the cords of the intermediate ply (22) and of the radially outer ply (23) are identical and have an open structure.

**Patentansprüche**

**1.** Luftreifen mit radialer Karkassenbewehrung (10) und einer darüberliegenden Scheitelbewehrung (20) aus wenigstens drei Einlagen (21, 22, 23) aus nichtstreckbaren Metalldrähten oder -seilen, die zur Umfangsrichtung Winkel $\pm \alpha$ von zwischen $10°$ und $45°$ bilden, **dadurch gekennzeichnet, daß** die Festigkeiten pro cm Breite $R_1$, $R_2$, $R_3$ der radial inneren Scheiteleinlage (21), der Zwischeneinlage (22) und der radial äußeren Einlage (23) so gewählt Sind, daß $1,5 \leq R_1/R_2 \leq 2,5$ und $0,5 \leq R_3/R_2 \leq 1,5$, wobei die Zwischeneinlage (22) und die radial äußere Einlage (23) aus Drähten oder Seilen so gebildet sind, daß in jeder Einlage der axiale Abstand (e) zwischen zwei benachbarten Drähten oder Seilen wenigstens gleich dem Durchmesser der Drähte oder Seile ist.

**2.** Luftreifen nach Anspruch 1, dadurch gekennzeichnet, daß die Einlagen (21, 22, 23) der Scheiteleinlage (20) eine Winkelkonfiguration $+ \alpha$, $- \beta$, $- \gamma$ haben.

**3.** Luftreifen nach einem der Ansprüche 1 bis 2, dadurch gekennzeichnet, daß die axialen Breiten $l_1$, $l_2$, $l_3$ der Einlagen (21, 22 bzw. 23) der Scheitelbewehrung (20) so gewählt sind, daß

$$l_1 > l_3 > l_2.$$

**4.** Luftreifen nach einem der Ansprüche 1 bis 3, dadurch gekennzeichnet, daß die Seile der der radialen Karkassenbewehrung (10) nächstliegenden Einlage (21) einen geschlossenen Aufbau haben und daß die Seile der Zwischeneinlage (22) und der radial äußeren Einlage (23) gleich sind und einen offenen Aufbau haben.

FIG 1

FIG 2

EP 0 545 287 B1